# EUROPÄISCHE PATENTSCHRIFT

(11) **EP 0 984 169 B1**
(45) Veröffentlichungstag und Bekanntmachung des Hinweises auf die Patenterteilung: **22.06.2005**
(21) Anmeldenummer: 99113107.9
(22) Anmeldetag: 07.07.1999
(51) Int. Cl.: F15B 13/08, F15B 21/08

(54) **Ventilanordnung mit mindestens einer aus mehreren elektrisch betätigbaren Ventilen bestehenden Ventileinheit**
Valve arrangement with at least one valve unit consisting of several electrically-actuated valves
Arrangement de soupapes avec au moins une unité composée de plusieurs soupapes à actionnement électrique

(30) Priorität: 05.09.1998 DE 19840596
(43) Veröffentlichungstag der Anmeldung: 08.03.2000
(73) Patentinhaber: Festo AG & Co, 73734 Esslingen (DE)
(72) Erfinder: Ruckwied, Dieter, 73098 Rechberghausen (DE); Waldeck, Christian, 73760 Ostfildern (DE)
(74) Vertreter: Vetter, Hans, Dipl.-Phys. Dr.

(56) Entgegenhaltungen:
- DE-A- 19 526 459
- DE-C- 4 413 657
- DE-U- 9 211 109
- US-A- 5 457 594
- PATENT ABSTRACTS OF JAPAN vol. 014, no. 473 (M-1035), 16. Oktober 1990 (1990-10-16) & JP 02 190538 A (KAYABA), 26. Juli 1990 (1990-07-26)

## Beschreibung

Die Erfindung betrifft eine Ventilanordnung mit mindestens einer aus mehreren elektrisch betätigbaren Ventilen bestehenden Ventileinheit gemäß dem Obergebriff des Anspruchs 1.

Bei einer derartigen, aus der DE-U-92 11 109 bekannten Ventilanordnung sind mehrere Ventileinheiten jeweils über ein Kabel miteinander verbunden. Bei diesen Kabeln handelt es sich jedoch um reine Feldbus-Kabel. Über die Art der Stromversorgung der einzelnen Ventileinheiten und deren Anschlüsse sind keine Ausführungen oder Anregungen enthalten.

Auch bei anderen, beispielsweise aus der DE-A-195 26 459 oder der JP-A-2 190 538 bekannten Ventilanordnungen ist die Art der Stromversorgung nicht beschrieben. Vielmehr sind auch dort Feldbus-Leitungen mit diesen Ventileinheiten verbunden.

Bei einer aus der DE 195 26 459 bekannten Ventilanordnung benötigt jede Ventileinheit eine eigene Busstation. Wenn eine neue, zusätzliche Ventileinheit zur Gesamtventilanordnung hinzukommt, so muss diese mit ihrer Busstation an den Bus angeschlossen und die Zentralstation entsprechend umprogrammiert bzw. zusätzlich programmiert werden. Das Hinzufügen einer zusätzlichen Ventileinheit ist somit relativ aufwändig sowie arbeits- und kostenintensiv.

Eine Aufgabe der vorliegenden Erfindung besteht somit darin, eine Ventilanordnung der eingangs genannten Gattung zu schaffen, bei der zusätzliche Ventileinheiten in einfacher und kostengünstiger Weise hinzugeführt werden können.

Diese Aufgabe wird erfindungsgemäß durch eine Ventilanordnung mit den Merkmalen des Anspruchs 1 gelöst.

Bei Erweiterung der Ventilanordnung durch eine zusätzliche Ventileinheit benötigt diese keine eigene Busstation, was bereits zu einer Kosteneinsparung führt. Die zusätzliche Ventileinheit braucht lediglich über das Verbindungskabel und die entsprechenden seriellen Anschlüsse mit der die Busstation aufweisenden zentralen Ventileinheit verbunden werden.

Hierzu ist der wenigstens eine serielle Anschluss der zentralen Ventileinheit sowie wenigstens ein serieller Anschluss der wenigstens einen weiteren Ventileinheit oder des wenigstens einen Eingangsmoduls in vorteilhafter Weise als Steckanschluss für das Verbindungskabel ausgebildet, so dass eine zusätzliche Ventileinheit mittels des Verbindungskabels durch einfaches Stecken mit der zentralen Ventileinheit bzw. mit der Busstation verbunden werden kann.

Die Steckanschlüsse und das wenigstens eine Verbindungskabel sind vorzugsweise auch zur Stromversorgung vorgesehen, so dass keine zusätzliche Verkabelung für die Stromversorgung erforderlich ist.

Durch die in den Unteransprüchen aufgeführten Maßnahmen sind vorteilhafte Weiterbildungen und Verbesserungen der im Anspruch 1 angegebenen Ventilanordnung möglich.

Die mit der Busstation versehene zentrale Ventileinheit besitzt zweckmäßigerweise einen Steckverbindungsarischluss für den Bus, der elektrisch oder als Lichtleiteranschluss ausgeführt sein kann, so dass hier eine Verbindung durch einfaches Einstecken der Busleitung erfolgen kann.

Jede Ventileinheit und jedes Eingangsmodul hat zweckmäßigerweise zwei Steckanschlüsse, so dass weitere Ventileinheiten mühelos angesteckt werden können, ohne dass Verteiler erforderlich sind.

In einer vorteilhaften Ausgestaltung der Erfindung sind die Ventile jeder Ventileinheit durch ein plattenartiges Gehäuseteil überdeckt, das die Busstation oder den Seriell/Parallel-Wandler sowie die elektrischen Anschlüsse aufweist. Vorzugsweise kann das plattenartige Gehäuseteil der zentralen Ventileinheit auch noch ein Stromversorgungsteil enthalten, das die verschiedenen benötigten Spannungen zur Verfügung stellt.

Das plattenartige Gehäuseteil besitzt elektrische Steckanschlüsse für die einzelnen elektrischen Antriebe der Ventile, die so ausgebildet sind, daß beim Aufstecken des plattenartigen Gehäuseteils auf die aneinandergereihten Ventile die erforderlichen elektrischen Verbindungen automatisch hergestellt werden und auch hier keine Verkabelung erforderlich ist.

Das mit der Busstation versehene plattenartige Gehäuseteil ist in vorteilhafter Weise mit einem lösbar einsteckbaren Einstell- und/oder Programmierteil für die Busstation versehen. In der praktischen Anwendung sind nämlich die Ventileinheiten oft schwer zugänglich, oder die Lichtverhältnisse sind schlecht, so daß eine Einstellung und Programmierung von Bedienelementen nur in sehr aufwendiger und umständlicher Weise möglich ist. Erfindungsgemäß kann nun das Einstell- und/oder Programmierteil abgenommen und bei guten Lichtverhältnissen, beispielsweise auf dem Schreibtisch, eingestellt werden. Die Einstellung kann so beispielsweise auch nach der Installation der gesamten Ventilanordnung erfolgen. Ein weiterer Vorteil besteht darin, daß beim Tausch von Ventileinheiten im Reparaturfall die Einstellung durch das austauschbare Einstell- und/oder Programmierteil erhalten bleibt und nicht neu erfolgen muß.

Zur Einstellung oder Programmierung ist das Einstell- und/oder Programmierteil entweder mit Einstellschaltern versehen, oder aber es besitzt einen durch einen Rechner programmierbaren Speicher, beispielsweise einen EPROM, einen EEPROM oder dgl. Auch im letzteren Falle kann dieses Einstell- und/oder Programmierteil entnommen und bei guten Lichtverhältnissen an einem Rechner oder einer sonstigen Programmiereinheit programmiert werden.

Das Einstell- und/oder Programmierteil ist zweckmäßigerweise mit einem elektrischen Verbindungsstecker versehen, der beim Einstecken des Einstell- und/oder Programmierteils in das plattenartige Gehäuseteil die elektrischen Verbindungen herstellt. Dieser Verbindungsstecker kann auch bei einem enthaltenen programmierbaren Speicher als Anschluß für den programmierenden Rechner dienen.

Ein Ausführungsbeispiel der Erfindung ist in der Zeichnung dargestellt und in der nachfolgenden Beschreibung näher erläutert. Es zeigen:
- Fig. 1: eine Ventilanordnung mit einer zentralen, eine Busstation aufweisenden Ventileinheit, an die zwei weitere Ventileinheiten über flexible Kabel angeschlossen sind, in einer perspektivischen Ansicht und
- Fig. 2: ein mit Einstellschaltern versehenes, lösbar in die zentrale Ventileinheit einsteckbares Einstell- und/oder Programmierteil.

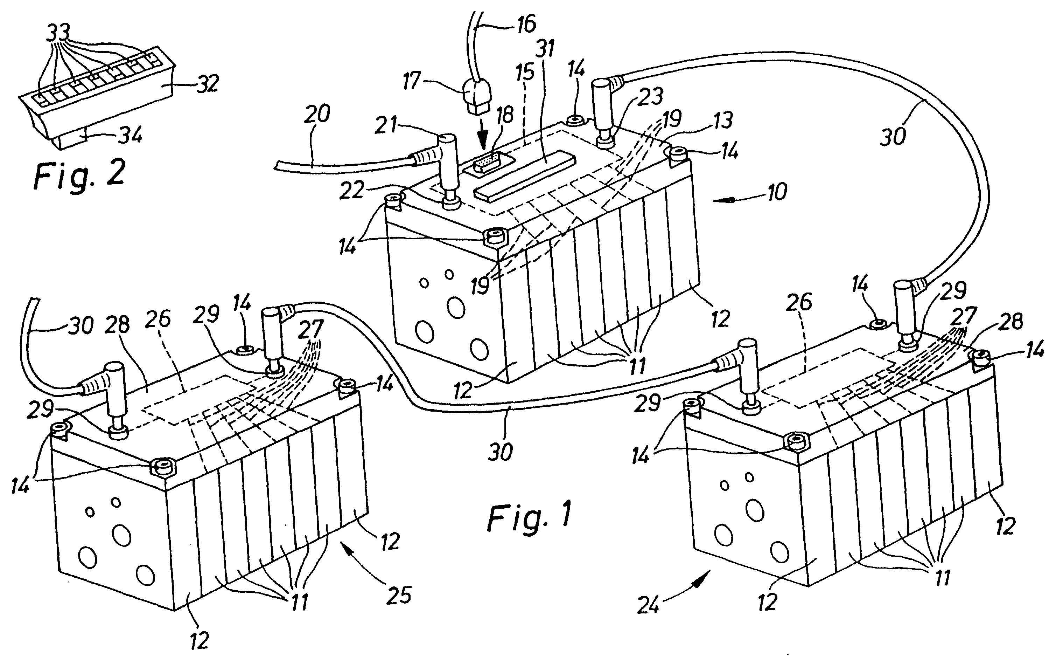

Bei der in Fig. 1 als Ausführungsbeispiel dargestellten Ventilanordnung besteht eine zentrale Ventilstation 10 aus sechs aneinandergereihten Plattenventilen 11 mit im wesentlichen rechteckförmigem Plattenumriß. An die beiden äußeren Plattenventile 11 dieses Plattenventilstapels ist jeweils noch eine entsprechend konturierte Endplatte 12 angereiht. Eine solche Ventileinheit ist beispielsweise aus der DE 44 13 657 bekannt und braucht daher nicht näher beschrieben zu werden. Jedes Plattenventil umfaßt beispielsweise ein Hauptventil und zwei zu dessen Ansteuerung dienende Vorsteuerventile, die durch elektrische Antriebe betätigbar sind, beispielsweise durch Elektromagnetanordnungen.

Die Anordnung von Plattenventilen 11 und Endplatten 12 wird von einem plattenartigen Gehäuseteil 13 überdeckt, das mittels Halteschrauben 14 an den beiden Endplatten 12 fixiert ist. Dieses Gehäuseteil 13 enthält eine Busstation 15, die über in einem Buskabel 16 angeordnete serielle Busleitungen mit einer nicht dargestellten Zentralstation verbindbar ist. An diese Zentralstation bzw. an die Busleitungen können selbstverständlich in üblicher Weise noch weitere Busstationen anderer Systeme oder Ventilanordnungen angeschlossen sein. Zur Verbindung der Busstation 15 mit dem Buskabel 16 ist dieses mit einem Stecker 17 versehen, der in eine Gegensteckvorrichtung 18 am Gehäuseteil 13 einsteckbar ist. Dieser Gehäuseanschluß kann prinzipiell elektrisch oder als Lichtleiteranschluß ausgeführt sein. Zur Steuerung der Plattenventile 11 ist die Busstation 15 über Steuerleitungen 19 mit den elektrischen Antrieben der einzelnen Plattenventile 11 verbunden. Hierzu enthält das Gehäuseteil 13 die erforderlichen nicht dargestellten Ventiltreiber.

Die Stromversorgung der zentralen Ventilstation 10 erfolgt über ein Versorgungskabel 20, das mittels eines Steckers 21 mit einer Versorgungs-Eingangsbuchse 22 am Gehäuseteil 13 verbindbar ist. Das Gehäuseteil 13 enthält ein nicht dargestelltes Stromversorgungsteil, das aus der über das Versorgungskabel 20 zur Verfügung gestellten Eingangsspannung von beispielsweise 24 Volt die erforderlichen Spannungen beispielsweise für die Busstation 15 zur Verfügung stellt.

Das plattenartige Gehäuseteil 13 besitzt weiterhin eine Ausgangsbuchse 23, über die weitere Ventilstationen 24, 25 an die zentrale Ventilstation 10 angeschlossen werden können. Diese weiteren Ventilstationen 24, 25 besitzen keine eigene Busstation, sondern es sind lediglich in den von der Gestalt her dem plattenartigen Gehäuseteil 13 ähnlichen plattenartigen Gehäuseteilen 28 Seriell/Parallel-Wandler 26 untergebracht, die jeweils über Steuerleitungen 27 mit den elektrischen Antrieben der Plattenventile 11 dieser weiteren Ventilstationen 24, 25 verbunden sind. Im übrigen sind diese weiteren Ventilstationen 24, 25 ähnlich der zentralen Ventilstation 10 aufgebaut, und gleiche oder gleichwirkende Bauteile sind mit denselben Bezugszeichen versehen und nicht nochmals beschrieben.

Jede der zusätzlichen Ventilstationen 24, 25 besitzt zwei Verbindungsbuchsen 29, wobei flexible Verbindungskabel 30 zur Verbindung der Ausgangsbuchse 23 mit einer Verbindungsbuchse 29 der Ventilstation 24 und einer weiteren Verbindungsbuchse 29 der Ventilstation 24 mit einer Verbindungsbuchse 29 der Ventilstation 25 vorgesehen sind. Ein nur teilweise dargestelltes Verbindungskabel an einer der Verbindungsbuchsen 29 der Ventilstation 25 soll andeuten, daß noch weitere, zusätzliche Ventilstationen angeschlossen werden können. Die flexiblen Verbindungskabel 30 enthalten serielle Leitungen zur übertragung von Steuerbefehlen von der Busstation 15 zu den Seriell/Parallel-Wandlern 26 bzw. zu den elektrischen Antrieben der Plattenventile 11 der zusätzlichen Ventilstationen 24, 25. Selbstverständlich ist es auch möglich, Rückmeldungen, beispielsweise Sensorrückmeldungen zur Busstation 15, über diese seriellen Leitungen zu übertragen.

Hierzu können nicht dargestellte Eingangsmodule anstelle oder zusätzlich zu den weiteren Ventilstationen 24, 25 vorgesehen sein. Diese Eingangsmodule besitzen ähnlich wie die weiteren Ventilstationen 24, 25 Seriell/Parallel-Wandler 26, die mit verschiedenen Sensoren verbindbar sind, beispielsweise zur überwachung der Endlagen oder sonstigen Positionen von Zylindern. Diese Eingangsmodule besitzen in ähnlicher Weise Verbindungsbuchsen 29, die entsprechend mit der zentralen Ventilstation 10 oder mit weiteren Ventilstationen 24, 25 verbunden werden können. Die erfaßten Sensorsignale werden dann jeweils in serielle Signale umgewandelt und über die flexiblen Verbindungskabel 30 der Busstation 15 zugeführt. Dabei ist es prinzipiell auch möglich, derartige Eingangsmodule mit zusätzlichen Ventilstationen zu kombinieren, das heißt, diesen zusätzlichen Ventilstationen können dann auch Sensorsignale zugeführt werden.

Weiterhin enthalten die flexiblen Verbindungskabel 30 Versorgungsleitungen, um von der zentralen Ventilstation 10 aus die weiteren Ventilstationen 24, 25 mit den notwendigen Betriebsspannungen zu versorgen. Aus diesem Grunde stellen die flexiblen Verbindungskabel 30 die einzigen Verbindungsleitungen dar und erübrigen eine sonstige Verkabelung.

Es ist zwar prinzipiell möglich, die Busstation 15 von der nicht dargestellten Zentralstation aus einzustellen und zu programmieren, jedoch hat es sich herausgestellt, daß eine lokale Einstellung und/oder Programmierung zweckmäßig und nützlich ist. Hierzu besitzt die zentrale Ventilstation 10 einen Steckplatz am plattenartigen Gehäuseteil 13, in den ein Speichermodul 31 lösbar einsteckbar ist. Zur Einstellung und/oder zur Programmierung der Busstation 15 wird das Speichermodul 31 herausgezogen und kann an einem Arbeitsplatz mittels eines Computers oder einer sonstigen Programmiereinrichtung programmiert und eingestellt werden. Danach wird es wieder in das Gehäuseteil 13 eingesteckt. Eine Änderung der Einstellung bzw. Programmierung ist zum Beispiel dann erforderlich, wenn eine zusätzliche Ventilstation hinzukommt, zur Einstellung der Busadresse, wenn sich die Zahl der Plattenventile 11 ändert, wenn sich die Funktionen einzelner Plattenventile ändern oder dgl. Das Speichermodul 31 besitzt hierzu einen nichtflüchtigen Speicher, beispielsweise einen EPROM, einen EEPROM oder einen batteriegepufferten Arbeitsspeicher. Die Steckkontakte des Speichermoduls 31 zur elektrischen Verbindung mit der Busstation 15 können gleichzeitig zur Verbindung mit der Programmiereinheit dienen.

Die Busstation 15 kann auch zur selbständigen Ausführung von Steuerungsprogrammen ausgebildet sein, die unabhängig von einer Steuerung über die Zentralstation ablaufen können. Hierdurch wird eine dezentrale Automatisierung im Rahmen einer kleinen, flexiblen und preiswerten Lösung erreicht.

In Abwandlung des in Fig. 1 dargestellten Ausführungsbeispiels kann anstelle des Speichermoduls 31 auch das in Fig. 2 dargestellte Einstellmodul 32 dienen, das anstelle des Speichermoduls 31 in das Gehäuseteil 13 einsteckbar ist. Dieses Einstellmodul 32 enthält Einstellschalter 33, die als sogenannte Dip-Schalter oder Dil-Schalter ausgebildet sein können. Auch mittels dieser Einstellschalter 33 können Einstellungen und einfache Programmierungen vorgenommen werden, beispielsweise die Einstellung von Adressen oder dgl. Es ist selbstverständlich auch möglich, kombinierte Einsteckmodule vorzusehen, die sowohl Einstellschalter als auch Speicher enthalten. In jedem Falle wird das jeweilige Modul zur Einstellung bzw. Programmierung aus dem Gehäuseteil 13 herausgezogen, und die erforderlichen Einstellungen und Programmierungen können am Arbeitsplatz bei guten Platz- und Lichtverhältnissen durchgeführt werden.

Im dargestellten Ausführungsbeispiel enthalten die Ventilstationen 10, 24, 25 jeweils sechs Plattenventile 11. Prinzipiell kann natürlich eine beliebige Anzahl von Plattenventilen 11 aneinandergereiht werden. Es ist lediglich erforderlich, entsprechend große Gehäuseteile 13, 28 vorzusehen, die die entsprechende Zahl von Plattenventilen 11 überdecken. Als zweckmäßig hat es sich dabei erwiesen, Gehäuseteile 13 bzw. 28 für Stapel von vier, sechs oder acht Plattenventilen vorzusehen.

Die Erfindung ist selbstverständlich nicht auf die Anwendung für Plattenventile 11 beschränkt, sondern kann auch für Ventilstationen eingesetzt werden, die andere Ventil-Reihenanordnungen aufweisen.

Im Ausführungsbeispiel sind alle Buchsen 22, 23, 29 gleich dargestellt. Zur besseren Unterscheidung können sie sich jedoch auch voneinander abheben, beispielsweise kann die Versorgungs-Eingangsbuchse 22 am Gehäuseteil 13 eine andere Gestalt aufweisen, vor allem dann, wenn sie ausschließlich zur Stromversorgung dient. Andererseits kann diese Eingangsbuchse 22 auch dieselbe Funktion wie die Ausgangsbuchse 23 aufweisen, das heißt, auch an sie können zusätzliche Ventilstationen angeschlossen werden. Die Versorgungsspannung muß dann dem Gehäuseteil 13 auf andere Weise zugeführt werden, beispielsweise über das Buskabel 16.

Die Gehäuseteile 13, 28 sind im Ausführungsbeispiel einteilig dargestellt. In einer Abwandlung der Erfindung können sie auch zweiteilig in Gestalt von zwei übereinanderliegenden Platten ausgebildet sein, wobei die an den Plattenventilen 11 anliegende Teilplatte Steckverbindungen oder Anschlußkontakte für die verschiedenen elektrischen Antriebe der Plattenventile 11 besitzt sowie entsprechende Leiterbahnen oder Verbindungsleitungen, die zu einer Steckkontaktanordnung zur Verbindung mit der äußeren zweiten Teilplatte führen. Die zweite äußere Teilplatte enthält dann die beschriebenen elektronischen Komponenten und Buchsen. Beim Aufstecken der ein- oder zweiteiligen Gehäuseteile 13, 28 auf die Ventilanordnung werden automatisch die elektrischen Verbindungen hergestellt.

Die plattenartigen Gehäuseteile 13, 28 können noch Kontrolleuchten zur Kontrolle des Betriebszustands der einzelnen Plattenventile 11 aufweisen.

## Patentansprüche

1. Ventilanordnung mit mindestens einer aus mehreren elektrisch betätigbaren Ventilen (11) bestehenden Ventileinheit, die eine mit einem seriellen, von einer Zentralstation gesteuerten Bus (16) verbindbare Busstation (15) besitzt, die über Steuerleitungen (19) mit den elektrischen Antrieben der Ventile (11) verbunden ist, und die wenigstens einen seriellen (23) Anschluss aufweist, der über ein Verbindungskabel (30) mit einem Seriell/Parallel-Wandler (26) wenigstens einer weiteren Ventileinheit (24, 25) und/oder wenigstens eines Eingangsmoduls zur Erfassung von Sensorsignalen verbindbar ist, wobei der Seriell/Parallel-Wandler (26) über Steuerleitungen (27) mit den elektrischen Antrieben der Ventile (11) dieser wenigstens einen weiteren Ventileinheit (24, 25) zur Steuerung der elektrischen Antriebe dieser Ventile durch die Busstation (15) und/oder über Sensorleitungen mit den Sensoren verbunden ist, **dadurch gekennzeichnet, dass** der wenigstens eine serielle Anschluss (23) der zentralen Ventileinheit (10) sowie wenigstens ein serieller Anschluss (29) der wenigstens einen weiteren Ventileinheit (24, 25) oder des wenigstens einen Eingangsmoduls als Steckanschluss für das Verbindungskabel (30) ausgebildet sind, und dass die als Steckanschlüsse ausgebildeten Anschlüsse (23, 29) und das wenigstens eine Verbindungskabel (30) auch zur Stromversorgung vorgesehen sind.

2. Ventilanordnung nach Anspruch 1, **dadurch gekennzeichnet, dass** die mit der Busstation (15) versehene zentrale Ventileinheit (10) einen Steckverbindungsanschluss (18) für den Bus besitzt, der elektrisch oder als Lichtleiteranschluss ausgeführt sein kann.

3. Ventilanordnung nach Anspruch 1 oder 2, **dadurch gekennzeichnet, dass** jede Ventileinheit (10; 24, 25) und jedes Eingangsmodul zwei als Steckanschlüsse ausgebildete Anschlüsse (22, 23, 29) besitzt.

4. Ventilanordnung nach einem der vorhergehenden Ansprüche, **dadurch gekennzeichnet, dass** die Ventile (11) jeder Ventileinheit (10, 24, 25) durch ein plattenartiges Gehäuseteil (13, 28) überdeckt sind, das die Busstation (15) oder den Seriell/Parallel-Wandler (26) sowie die elektrischen Anschlüsse (22, 23, 29) aufweist.

5. Ventilanordnung nach Anspruch 4, **dadurch gekennzeichnet, dass** das plattenartige Gehäuseteil (13, 28) elektrische Steckanschlüsse besitzt, die beim Aufstecken des plattenartigen Gehäuseteils (13, 28) auf die aneinandergereihten Ventile (11) die elektrischen Verbindungen zu den einzelnen Antrieben dieser Ventile (11) herstellen.

6. Ventilanordnung nach Anspruch 4 oder 5, **dadurch gekennzeichnet, dass** das plattenartige Gehäuseteil (13) der zentralen Ventilstation (10) auch ein Stromversorgungsteil enthält.

7. Ventilanordnung nach einem der vorhergehenden Ansprüche, **dadurch gekennzeichnet, dass** die Ventile (11) als Plattenventile ausgebildet sind.

8. Ventilanordnung nach einem der vorhergehenden Ansprüche, **dadurch gekennzeichnet, dass** das mit der Busstation (15) versehene plattenartige Gehäuseteil (13) mit einem lösbar einsteckbaren Einstell- und/oder Programmierteil (31, 32) für die Busstation (15) versehen ist.

9. Ventilanordnung nach Anspruch 8, **dadurch gekennzeichnet, dass** das Einstell- und/oder Programmierteil (32) mit Einstellschaltern (33) versehen ist.

10. Ventilanordnung nach Anspruch 8 oder 9, **dadurch gekennzeichnet, dass** das Einstell- und/oder Programmierteil (31) mit einem durch einen Rechner oder eine Programmiereinrichtung programmierbaren Speicher, insbesondere EPROM, EEPROM, batteriegepufferter Arbeitsspeicher oder dergleichen, versehen ist.

11. Ventilanordnung nach einem der Ansprüche 8 bis 10, **dadurch gekennzeichnet, dass** das Einstell- und/oder Programmierteil (31, 32) mit einem elektrischen Verbindungsstecker (34) versehen ist, der beim Einstecken des Einstell- und/oder Programmierteils (31, 32) in das plattenartige Gehäuseteil (13) die elektrischen Verbindungen herstellt.

12. Ventilanordnung nach einem der vorhergehenden Ansprüche, **dadurch gekennzeichnet, dass** einer der Anschlüsse (22) des Gehäuseteils (13) der zentralen Ventilstation (10) als Stromversorgungsbuchse ausgebildet ist.

13. Ventilanordnung nach einem der vorhergehenden Ansprüche, **dadurch gekennzeichnet, dass** die Busstation (15) zur selbständigen Bearbeitung von Steuerungsprogrammen ausgebildet ist.

## Claims

1. Valve assembly with at least one valve unit comprising a plurality of electrically operated valves (11) and featuring a bus station (15) capable of being connected to a serial bus (16) controlled by a central station, which is connected to the electric drives of the valves (11) via control lines (19) and which has at least one serial port (23) capable of being connected, via a connecting cable (30), to a serial/parallel converter (26) of at least one further valve unit (24, 25) and/or at least one input module for the detection of sensor signals, wherein the serial/parallel converter (26) is connected, via control lines (27) to the electric drives of the valves (11) of said at least one further valve unit (24, 25) for the control of the electric drives of said valves by the bus station (15) and/or is connected, via sensor lines, to the sensors, **characterised in that** the at least one serial port (23) of the central valve unit (10) and at least one serial port (29) of the at least one further valve unit (24, 25) or the at least one input module is designed as a plug-in connection for the connecting cable (30), and **in that** the ports (23, 29) designed as plug-in connections and the at least one connecting cable (30) are in addition provided for power supply.

2. Valve assembly according to claim 1, **characterised in that** central valve unit (10) with the bus station (15) is provided with a plug-and-socket connector (18) for the bus, which may be electrical or designed as an optical fibre connector.

3. Valve assembly according to claim 1 or 2, **characterised in that** each valve unit (10; 24, 25) and each input module has two ports designed as plug-in connections (22, 23, 29).

4. Valve assembly according to any of the preceding claims, **characterised in that** the valves (11) of each valve unit (10, 24, 25) are covered by a plate-like housing part (13, 28) on which the bus station (15) or the serial/parallel converter (26) and the electrical connections (22, 23, 29) are located.

5. Valve assembly according to claim 4, **characterised in that** the plate-like housing part (13, 28) has plug-in connections establishing the electric connections to the individual drives of the valves (11) when the plate-like housing part (13, 28) is placed on the lined-up valves (11).

6. Valve assembly according to claim 4 or 5, **characterised in that** the plate-like housing part (13) of the central valve station (10) in addition incorporates a power supply unit.

7. Valve assembly according to any of the preceding claims, **characterised in that** the valves (11) are designed as plate valves.

8. Valve assembly according to any of the preceding claims, **characterised in that** the plate-like housing part (13) connected to the bus station (15) is provided with a releasable plug-in setting and/or programming component (31, 32) for the bus station (15).

9. Valve assembly according to claim 8, **characterised in that** the setting and/or programming component (32) is provided with setting switches (33).

10. Valve assembly according to claim 8 or 9, **characterised in that** the setting and/or programming component (31) is provided with a memory, in particular an EPROM, EEPROM, battery-puffered random access memory or the like, programmable by a computer or a programming unit.

11. Valve assembly according to any of claims 8 to 10, **characterised in that** the setting and/or programming component (31, 32) is provided with a plug (34) establishing the electrical connections when the setting and/or programming component (31, 32) is plugged into the plate-like housing part (13).

12. Valve assembly according to any of the preceding claims, **characterised in that** one of the ports (22) of the housing part (13) of the central valve station (10) is designed as a power supply socket.

13. Valve assembly according to any of the preceding claims, **characterised in that** the bus station (15) is designed for the independent processing of control programmes.

## Revendications

1. Agencement de soupapes avec au moins une unité de soupape constituée de plusieurs soupapes (11) actionnables électriquement, qui possède un poste de bus (15) pouvant être relié en série par un bus (16) commandé depuis un poste central, ledit poste de bus étant relié, par des lignes de commande (19), aux entraînements électriques des soupapes (11) et comportant au moins un raccordement série (23) qui peut être relié, par un câble de liaison (30), à un convertisseur série/parallèle (26) d'au moins une autre unité de soupape (24, 25) et/ou d'au moins un module d'entrée pour détecter des signaux de capteurs, le convertisseur série/parallèle (26) étant relié, par des lignes de commande (27), aux entraînements électriques des soupapes (11) de cette au moins une autre unité de soupape (24, 25) pour la commande des entraînements électriques de ces soupapes par le poste de bus (15) et/ou aux capteurs par des lignes de capteurs, **caractérisé en ce que** le au moins un raccordement série (23) de l'unité de soupape centrale (10) ainsi qu'au moins un raccordement série (29) de la au moins une autre unité de soupape (24, 25) ou du au moins un module d'entrée étant réalisés comme raccordement par enfichage pour le câble de liaison (30), et **en ce que** les raccordements (23, 29), réalisés comme raccordements par enfichage, et le au moins un câble de liaison (30) sont prévus aussi pour l'alimentation électrique.

2. Agencement de soupapes selon la revendication 1, **caractérisé en ce que** l'unité de soupape centrale (10) pourvue du poste de bus (15) possède un raccordement de connexion par enfichage (18) pour le bus, lequel peut être réalisé électriquement ou comme raccordement de guide optique.

3. Agencement de soupapes selon la revendication 1 ou 2, **caractérisé en ce que** chaque unité de soupape (10 ; 24, 25) et chaque module d'entrée possède deux raccordements (22, 23, 29) réalisés comme raccordements par enfichage.

4. Agencement de soupapes selon l'une des revendications précédentes, **caractérisé en ce que** les soupapes (11) de chaque unité de soupape (10, 24, 25) sont recouvertes par une partie de boîtier (13, 28) de type plaque qui comporte le poste de bus (15) ou le convertisseur série/parallèle (26) ainsi que les raccordements électriques (22, 23, 29).

5. Agencement de soupapes selon la revendication 4, **caractérisé en ce que** la partie de boîtier (13, 28) de type plaque possède des raccordements électriques par enfichage qui réalisent les connexions électriques avec les différents entraînements des soupapes (11), lorsque l'on enfiche la partie de boîtier (13, 28) de type plaque sur les soupapes (11) juxtaposées.

6. Agencement de soupapes selon la revendication 4 ou 5, **caractérisé en ce que** la partie de boîtier (13) de type plaque du poste de soupape central (10) contient également une partie d'alimentation électrique.

7. Agencement de soupapes selon l'une des revendications précédentes, **caractérisé en ce que** les soupapes (11) sont réalisées comme soupapes à plaque.

8. Agencement de soupapes selon l'une des revendications précédentes, **caractérisé en ce que** la partie de boîtier (13) de type plaque pourvue du poste de bus (15) est dotée d'une partie de réglage et/ou de programmation (31, 32), pouvant être enfichée de manière séparable, pour le poste de bus (15).

9. Agencement de soupapes selon la revendication 8, **caractérisé en ce que** la partie de réglage et/ou de programmation (32) est pourvue de commutateurs de réglage (33).

10. Agencement de soupapes selon la revendication 8 ou 9, **caractérisé en ce que** la partie de réglage et/ou de programmation (31) est dotée d'une mémoire programmable par un ordinateur ou par un dispositif de programmation, en particulier de mémoires EEPROM, de mémoires de travail à batterie tampon ou similaires.

11. Agencement de soupapes selon l'une des revendications 8 à 10, **caractérisé en ce que** la partie de réglage et/ou de programmation (31, 32) est pourvue d'un connecteur électrique (34) qui, lorsque l'on enfiche la partie de réglage et/ou de programmation (31, 32) dans la partie de boîtier (13) de type plaque, réalise les connexions électriques.

12. Agencement de soupapes selon l'une des revendications précédentes, **caractérisé en ce que** l'un des raccordements (22) de la partie de boîtier (13) du poste de soupape central (10) est réalisé comme douille d'alimentation électrique.

13. Agencement de soupapes selon l'une des revendications précédentes, **caractérisé en ce que** le poste de bus (15) est conçu pour le traitement autonome de programmes de commande.
